# EUROPÄISCHE PATENTSCHRIFT

(11) **EP 2 489 898 B1**
(45) Veröffentlichungstag und Bekanntmachung des Hinweises auf die Patenterteilung: **31.10.2018**
(21) Anmeldenummer: 11007556.1
(22) Anmeldetag: 16.09.2011
(51) Int. Cl.: F16F 1/38

(54) **Lager sowie Verfahren zu dessen Herstellung**
Bearing and method for its manufacture
Palier et son procédé de fabrication

(30) Priorität: 15.02.2011 DE 102011011298
(43) Veröffentlichungstag der Anmeldung: 22.08.2012
(73) Patentinhaber: Vibracoustic GmbH, 64293 Darmstadt (DE)
(72) Erfinder: Hettler, Werner, 68309 Mannheim (DE)
(74) Vertreter: Flügel Preissner Schober Seidel

(56) Entgegenhaltungen:
- EP-A1- 1 571 366
- DE-A1- 2 816 742
- DE-A1- 19 859 067
- DE-A1-102004 062 807
- DE-A1-102006 050 070
- DE-A1-102006 055 127
- DE-A1-102007 016 741

## Beschreibung

### Technisches Gebiet

Die Erfindung betrifft ein Getriebelager, umfassend ein Gehäuse, einen Lagerkern und einen Federkörper aus elastomerem Werkstoff, wobei das Gehäuse den Lagerkern außenumfangsseitig mit Abstand umschließt und wobei in dem durch den Abstand gebildeten Spalt der Federkörper angeordnet ist.

### Stand der Technik

Ein solches Lager ist aus der DE 10 2006 055 127 A1 bekannt.
Der Federkörper und das Gehäuse sind durch Vulkanisation miteinander verbunden.
In den Federkörper ist ein Aufnahmeteil einvulkanisiert, das eine Aufnahmeöffnung für den Lagerkern aufweist. Beim Einführen des Lagerkerns in das Aufnahmeteil wird eine Vorspannung von innen in den Federkörper eingebracht, wobei der Grad der Vorspannung von der Breite des einzusetzenden Lagerkerns abhängig ist. Wird der Lagerkern breiter gewählt, so erhöht sich die Vorspannung des Federkörpers; ist die Breite des Lagerkerns demgegenüber geringer, so ist auch die Vorspannung des Federkörpers reduziert.

Durch die Anpassung der Breite des Lagerkerns und somit der Vorspannung des Federkörpers an den jeweiligen Anwendungsfall, ist es nicht mehr erforderlich, für jeden Anwendungsfall einen speziellen, in seiner Form darauf abgestimmten Federkörper konstruieren zu müssen. Zur Herstellung entsprechend angepasster Federkörper müsste jeweils ein entsprechendes Vulkanisationswerkzeug hergestellt werden, was in wirtschaftlicher Hinsicht wenig zufriedenstellend ist.

Das Aufnahmeteil umfasst eine erste und eine zweite Kernführung, zwischen denen der Lagerkern aufgenommen ist. Die beiden Kernführungen sind durch einen Steg in einem ersten Zustand miteinander verbunden, wobei dieser Steg vor oder bei Einsetzen des Lagerkerns entfernt wird.

Die Kalibrierung des Federkörpers ist zur Erhöhung der Gebrauchsdauer erforderlich, weil bei der Vulkanisation Schrumpfungsvorgänge auftreten, die in dem elastomeren Werkstoff des Federkörpers zu inneren Zugspannungen führen, die die Lebensdauer des Lagers verkürzen. Um das Auftreten innerer Zugspannungen zu verhindern, werden Druckvorspannungen auf den Federkörper aufgebracht, die so groß sind, dass bei der bestimmungsgemäßen Verwendung des Lagers keine die Gebrauchsdauer verringernden Zugspannungen auftreten.

EP 1 571 366 A1 beschreibt ein Lager, dessen beiden Außenhalbschalen einstückig ausgebildet sind. Dies soll den Einbau des Innenteils erleichtern und die Spannung des Innenteils gegenüber dem Lagergehäuse verbessern.

DE 198 59 067 A1 offenbart ein Gummilager mit in Umfangsrichtung unterschiedlichen Kennungsverhalten. Das Gummilager weist ein Innenteil, ein Elastomer und ein Aufnahmeauge auf. Das Elastomer ist an dem Innenteil anvulkanisiert und wird durch zusammendrücken des Elastomers in dem Aufnahmeauge fixiert.

DE 10 2006 050 070 A1 zeigt ein elastisches Lager für ein Kraftfahrzeugaggregat. Das Lager weist ein Gehäuse, eine Anschlussstange und eine Tragfeder auf. Die Tragfeder ist an der Anschlussstange anvulkanisiert.

### Darstellung der Erfindung

Der Erfindung liegt die Aufgabe zugrunde, ein Getriebelager der vorbekannten Art derart weiterzuentwickeln, dass dieses einen einfacheren Aufbau aufweist und dadurch einfacher zu montieren und kostengünstiger herzustellen ist.

Diese Aufgabe wird erfindungsgemäß durch ein Getriebelager mit den Merkmalen von Anspruch 1 und durch das Verfahren nach Anspruch 5 gelöst. Auf vorteilhafte Ausgestaltungen nehmen die auf Anspruch 1 rückbezogenen Ansprüche Bezug.

Zur Lösung der Aufgabe ist es vorgesehen, dass das Gehäuse und der Federkörper einander ungebunden zugeordnet sind. Der Federkörper und der Lagerkern sind miteinander vulkanisiert ausgebildet sind, wobei der Lagerkern im Wesentlichen doppel-T-förmig ausgebildet ist und vier in X-Richtung des Getriebelagers angeordnete Anschlagpuffer aufweist. Der Federkörper ist mit zwei einander gegenüberliegend angeordneten Anbindeteilen verbunden. Der Federkörper ist mittels der Anbindeteile unter elastischer Vorspannung im Gehäuse festgelegt. Die Anbindeteile umschließen den Federkörper aussenumfangsseitig halbschalenförmig und die einander zugewandten Seiten der Halbschalen berühren sich während der bestimmungsgemäßen Verwendung des Getriebelagers anliegend. Der elastomere Werkstoff des Federkörpers umschließt den Lagerkern außenumfangsseitig vollständig.

Unter ungebunden zugeordnet' wird in diesem Zusammenhang verstanden, dass das Gehäuse und der Federkörper, im Gegensatz zu dem Lager aus dem zitierten Stand der Technik, nicht aneinander vulkanisiert sind; das Gehäuse und der Federkörper gehen keine Bindung miteinander ein. Hierbei ist von Vorteil, dass die Konstruktion des Getriebelagers und auch dessen Montage vereinfacht sind. Der Federkörper und der Lagerkern werden vor deren Montage in das Gehäuse vormontiert und bilden dadurch eine vormontierbare Einheit. Diese Einheit wird anschließend in den Einbauraum des Gehäuses eingesetzt. Eine stoffschlüssige Verbindung zwischen dem Federkörper und dem Gehäuse besteht nicht.

Um das Auftreten von die Gebrauchsdauer verringernden Zugspannungen innerhalb des elastomeren Werkstoffs des Federkörpers zu verhindern, ist von Vorteil, dass der Federkörper unter elastischer Vorspannung im Gehäuse angeordnet ist. Die elastische Vorspannung ist so groß, dass innerhalb des Federkörpers während der bestimmungsgemäßen Verwendung des Getriebelagers keine Zugspannungen auftreten.

Nach einer alternativen Ausgestaltung kann es vorgesehen sein, dass der Federkörper das Gehäuse unter elastischer Vorspannung unmittelbar anliegend berührt. Ein solches Lager weist einen besonders einfachen und teilearmen Aufbau auf. Das Lager besteht dabei lediglich aus drei Teilen, nämlich dem Gehäuse, dem Lagerkern und dem Federkörper, der unter elastischer Vorspannung zwischen dem Lagerkern und dem Gehäuse angeordnet ist. Gehalten wird die vormontierbare Einheit, bestehend aus dem Lagerkern und dem Federkörper alleine dadurch, dass der Federkörper kraftschlüssig und/oder formschlüssig innerhalb des Einbauraums des Gehäuses angeordnet ist. Bei großen Z-Wegen ist von Vorteil, wenn zusätzlich zum Kraftschluss Formschluss besteht.

Es ist vorgesehen, dass der Federkörper mit zwei einander gegenüberliegend angeordneten Anbindeteilen verbunden ist und dass der Federkörper mittels der Anbindeteile unter elastischer Vorspannung im Gehäuse festgelegt ist. Die Anbindeteile und der Federkörper sind bevorzugt miteinander vulkanisiert ausgebildet, wobei die Anbindeteile auf der dem Lagerkern abgewandten Seite des Federkörpers angeordnet sind. Die Vorspannung wird dadurch von außen auf den Federkörper aufgebracht, dass die Anbindeteile aufeinander zubewegt werden. Die Montage der vormontierbaren Einheit, bestehend aus dem Lagerkern, dem Federkörper und den Anbindeteilen in das Gehäuse erfolgt derart, dass die Anbindeteile so lange aufeinander zubewegt werden, bis die vormontierbare Einheit in den Einbauraum des Gehäuses passt und darin eingesetzt werden kann. Nach dem Einsetzen der vormontierbaren Einheit legen sich die Anbindeteile an die Begrenzungswandung des Einbauraums unter elastischer Vorspannung an. Die vormontierbare Einheit kann durch eine kraft- und/oder formschlüssige Verbindung innerhalb des Einbauraums des Gehäuses gehalten werden. Die kraftschlüssige Verbindung kann sich alleine dadurch ergeben, dass die Anbindeteile die Begrenzungswandungen des Einbauraums unter elastischer Vorspannung anliegend berühren. Reicht eine solche kraftschlüssige Verbindung für einen sicheren Halt der vormontierten Einheit im Gehäuse nicht aus, kann die Einheit durch Formschluss mit dem Gehäuse verbunden sein.

Dazu kann es vorteilhaft vorgesehen sein, dass die Anbindeteile stirnseitig zumindest einerseits jeweils zumindest eine Bördellasche aufweisen, und dass die Bördellasche mit dem Gehäuse formschlüssig verbunden ist. Nach dem Einsetzen der vormontierbaren Einheit aus Lagerkern, Federkörper und Anbindeteilen in den Einbauraum des Gehäuses können die Bördellaschen hinter jeweils einem Gehäusevorsprung des Gehäuses umgebördelt werden. Bevorzugt erfolgt die formschlüssige Verbindung stirnseitig beiderseits. Die Anbindeteile können dazu stirnseitig einerseits bereits einen nach außen abgewinkelten Bund aufweisen, der sich nach der Montage der vormontierbaren Einheit im Einbauraum an einen Vorsprung des Gehäuses anlegt. Stirnseitig andererseits werden dann die Bördellaschen umgebördelt. In Montagerichtung ist die vormontierte Einheit dann innerhalb des Einbauraums des Gehäuses dauerhaft fixiert.

Die Anbindeteile umschließen den Federkörper außenumfangsseitig halbschalenförmig, wobei sich die einander zugewandten Seiten der Halbschalen während der bestimmungsgemäßen Verwendung des Getriebelagers anliegend berühren. Die einander zugewandten Seiten der Halbschalen sind in einem solchen Fall als Anschläge ausgebildet und verhindern eine unerwünscht große Druckvorspannung innerhalb des Federkörpers. Beim Aufeinanderzubewegen der Anbindeteile im Vorfeld der Montage in das Gehäuse und zum Aufbringen einer Druckvorspannung in den Federkörper können die Anbindeteile nur so lange aufeinander zubewegt werden und damit die Druckvorspannung im Federkörper erhöht werden, bis sich die einander zugewandten Seiten der Halbschalen anliegend berühren. Die Größe der Druckvorspannung ist dadurch auf ein vorbestimmtes Maß begrenzt. Die Gebrauchseigenschaften des Lagers sind dadurch gut vorherbestimmbar; die Gefahr einer unerwünschten montagebedingten Veränderung der Gebrauchseigenschaften des Lagers ist dadurch auf ein Minimum begrenzt.

Der elastomere Werkstoff des Federkörpers umschließt den Lagerkern außenumfangsseitig vollständig. Dabei ist von Vorteil, dass der Lagerkern einerseits vor äußeren Einflüssen geschützt ist und andererseits Anschlaggeräusche bei einer Berührung des Lagerkerns mit seiner Umgebung minimiert sind.

Der Federkörper und der Lagerkern sind miteinander vulkanisiert ausgebildet. Die beiden genannten Teile bilden dadurch eine Einheit und sind dauerhaft haltbar miteinander verbunden.

Der Lagerkern ist im Wesentlichen doppel-T-förmig ausgebildet und weist vier in X-Richtung des Lagers angeordnete Anschlagpuffer auf. Die X-Richtung bezeichnet die Fahrtrichtung eines Kraftfahrzeugs, in dem das Lager zur Anwendung gelangen kann. Während der bestimmungsgemäßen Verwendung des Lagers werden unerwünscht große Verformungen des Federkörpers und dadurch unerwünscht große innere Spannungen durch ein Anschlagen der Anschlagpuffer vermieden. Unerwünscht große Druckvorspannungen werden in jedem Fall vermieden. Je nach Abstimmung des Lagers kann durch ein Anschlagen der Anschlagpuffer auch die Entstehung von Zugspannungen im Federkörper bevorzugt vollständig vermieden werden.

Der doppel-T-förmige Lagerkern erstreckt sich in Y-Richtung quer zur X-Richtung. Zwischen den in Y-Richtung benachbarten Anschlagpuffern ist der Federkörper angeordnet, der den Lagerkern in X-Richtung elastisch nachgiebig gegenüber dem Gehäuse abstützt.

Das Gehäuse kann als Trägerplatte ausgebildet sein und zusätzlich zum Federkörper zumindest ein weiteres Stützlager tragen. Dieses zumindest eine weitere Stützlager kann z. B. als Hydrolager ausgebildet sein.
Das erfindungsgemäße Lager wird als Getriebelager in Kraftfahrzeugen verwendet.

Je mehr zusätzliche Federkörper zum Einsatz kommen, desto größer wird die Trägerplatte und desto größer der Vorteil gegenüber dem eingangs zitierten Stand der Technik. Der Vorteil ist darauf zurückzuführen, dass die Trägerplatte nicht mehr im Vulkanisationswerkzeug untergebracht werden muss, so dass eine höhere Fachheit möglich ist.
Auf dem als Trägerplatte ausgebildeten Gehäuse kann ein im Wesentlichen rechteckiger Einbauraum für den Lagerkern und den Federkörper vorgesehen sein, wobei die Einheit aus Lagerkern und Federkörper im Wesentlichen quaderförmig ausgebildet ist.

Die Erfindung betrifft außerdem ein Verfahren zur Montage eines Getriebelagers, wie zuvor beschreiben, wobei der Lagerkern und der Federkörper in das Gehäuse montiert werden.
Ein solches Verfahren ist, wie eingangs beschrieben, aus der DE 10 2006 055 127 A1 bekannt.

Der Erfindung liegt die Aufgabe zugrunde, ein solches Verfahren derart weiterzuentwickeln, dass es einfacher durchführbar ist.

Zur Lösung der Aufgabe ist es vorgesehen, dass in einem ersten Verfahrensschritt der Lagerkern mit dem Federkörper vulkanisiert wird und dass in einem zweiten Verfahrensschritt der Federkörper unter elastischer Vorspannung in einen Einbauraum des Gehäuses eingesetzt wird. Sowohl das Vulkanisieren der Einheit, bestehend aus Lagerkern und Federkörper als auch das Einsetzen der Einheit in das Gehäuse ist kostengünstig und einfach durchführbar. Die elastische Druckvorspannung auf den Federkörper wird von außen nach innen in Richtung des Lagerkerns aufgebracht. Die Einheit aus Lagerkern und vorgespanntem Federkörper wird anschließend in den Einbauraum des Gehäuses eingesetzt. Die Druckvorspannung im Federkörper ist dabei so bemessen, dass während der bestimmungsgemäßen Verwendung des Lagers und Bewegungen des Lagerkerns, bezogen auf das Gehäuse in X-Richtung, innerhalb des Federkörpers keine die Gebrauchsdauer verringernden Zugspannungen auftreten.

Alternativ kann es vorgesehen sein, dass in einem ersten Verfahrensschritt der Lagerkern und die Anbindeteile mit dem Federkörper vulkanisiert werden, dass in einem zweiten Verfahrensschritt der Federkörper über die Anbindeteile von außen elastisch vorgespannt wird und dass der vorgespannte Federkörper, der Lagerkern und die Anbindeteile in einem dritten Verfahrensschritt in den Einbauraum des Gehäuses eingesetzt werden.

In einem vierten Verfahrensschritt können die Bördellaschen der Anbindeteile hinter jeweils einem Gehäusevorsprung des Gehäuses umgebördelt werden. In Z-Richtung, die sich senkrecht zur X-Richtung und zur Y-Richtung erstreckt, ist die Einheit, bestehend aus Lagerkern, Federkörper und Anbindeteilen dann formschlüssig innerhalb ihres Einbauraums im Gehäuse fixiert.

### Kurzbeschreibung der Zeichnung

Ein Ausführungsbeispiel des erfindungsgemäßen Getriebelagers und die jeweiligen Verfahren zu deren Montage sind in den Fig. 1 bis 8 dargestellt und werden nachfolgend näher beschrieben. Diese zeigen jeweils in schematischer Darstellung:
- Fig. 1: ein erstes Ausführungsbeispiel eines erfindungsgemäßen Lagers, in einer perspektivischer Darstellung von oben,
- Fig. 2: das Lager aus Fig. 1 in einer perspektivischen Darstellung von unten,
- Fig. 3: die Einheit, bestehend aus Lagerkern, Federkörper und Anbindeteilen, in einer perspektivischen Ansicht von unten, vor dem Einbau in das Gehäuse,
- Fig. 4: eine Draufsicht auf die Einheit aus Fig. 3,
- Fig. 5: eine Schnittdarstellung der Einheit aus den Fig. 3 und 4,
- Fig. 6: die Einheit aus Fig. 3 im eingebauten Zustand, ohne dass das Gehäuse dargestellt ist,
- Fig. 7: die Einheit aus Fig. 6 in einer Draufsicht,
- Fig. 8: die Einheit aus den Fig. 6 und 7, eingebaut in ein Gehäuse, in geschnittener Darstellung,
- Fig. 9: ein weiteres Ausführungsbeispiel eines Lagers, ähnlich dem Lager aus Fig. 1, ohne dass Anbindeteile zur Anwendung gelangen.

### Ausführung der Erfindung

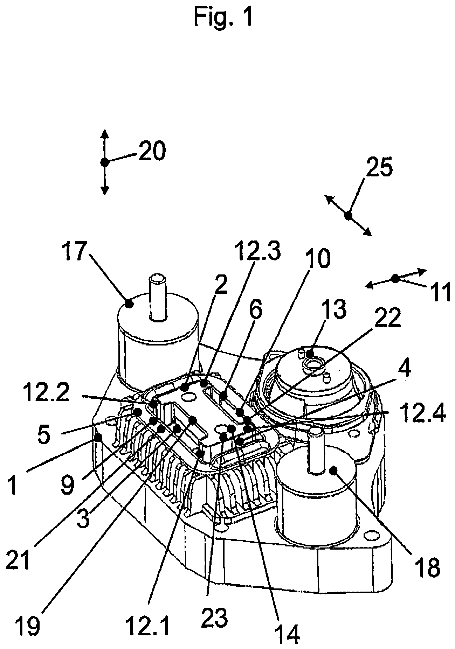

In der Fig. 1 ist ein Ausführungsbeispiel eines erfindungsgemäßen Getriebelagers gezeigt.

Das Getriebelager umfasst dabei ein Gehäuse 1, das als Trägerplatte ausgebildet ist und zusätzlich zum Federkörper 3 zumindest ein weiteres Stützlager 13 trägt. Das weitere Stützlager 13 ist in den gezeigten Ausführungsbeispielen jeweils als Hydrolager ausgebildet, wobei zusätzlich zu dem Federkörper 3 und dem weiteren Stützlager 13 die beiden Gummilager 17, 18 zur Abstützung eines Aggregats, insbesondere eines Getriebes in einem Kraftfahrzeug, vorgesehen sind.

Der Federkörper 3, der in dem Spalt 4 zwischen dem Gehäuse 1 und dem Lagerkern 3 angeordnet ist, ist dem Gehäuse 1 ungebunden zugeordnet.

In Fig. 1 ist ein erstes Ausführungsbeispiel des erfindungsgemäßen Getriebelagers gezeigt. Der Federkörper 3 bildet zusammen mit den Anbindeteilen 5, 6 und dem Lagerkern 2 eine vormontierte Einheit 19, die als Ganzes in den Einbauraum 14 des Gehäuses 1 eingesetzt wird. Der Einbauraum 14 ist im Wesentlichen rechteckig gestaltet, ebenso wie die kongruent gestaltete Einheit 19.

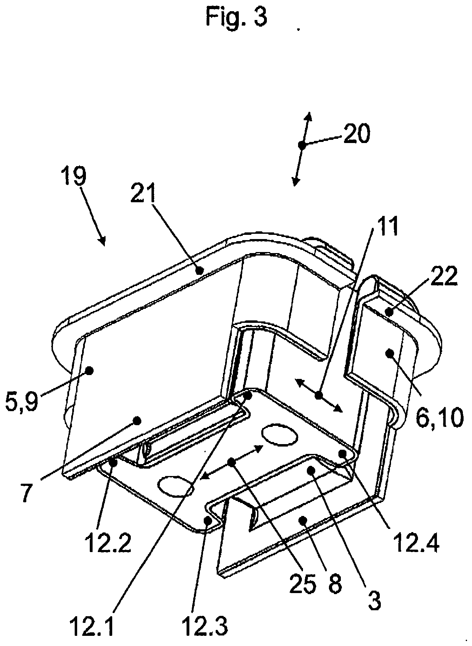

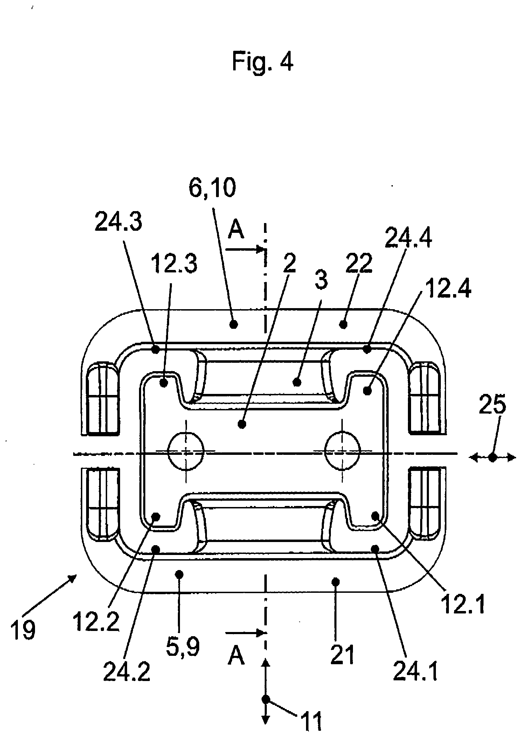

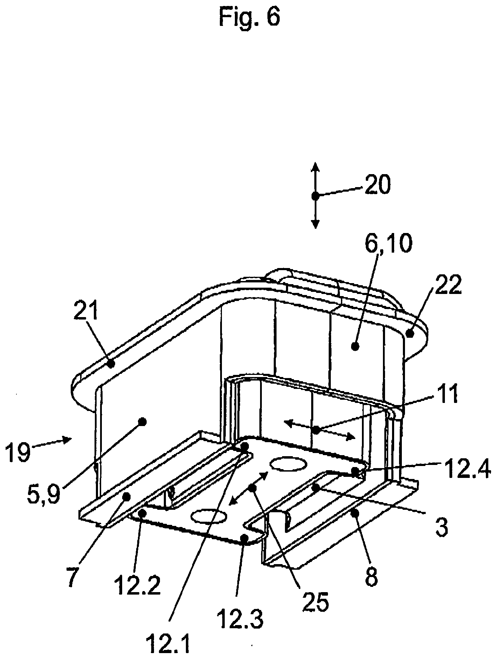

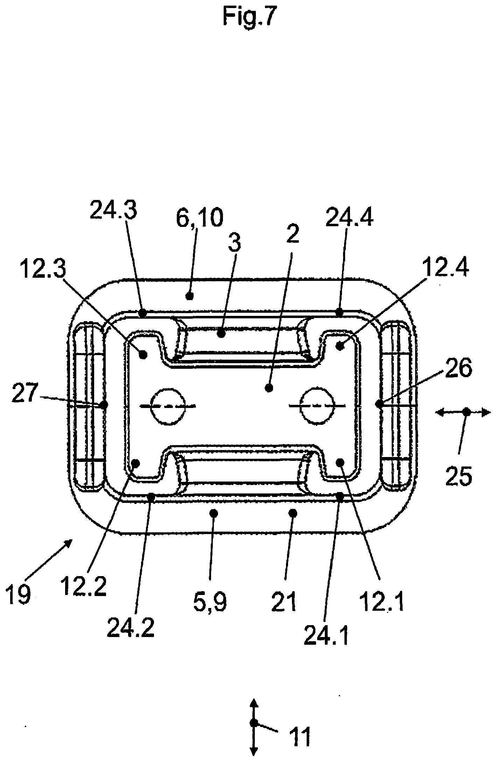

Während der bestimmungsgemäßen Verwendung des Lagers werden die Gebrauchsdauer verringernde Zugspannungen innerhalb des Federkörpers 3 dadurch vermieden, dass der Federkörper 3 unter einer elastischen Druckvorspannung im Gehäuse 1 angeordnet ist. Diese Druckvorspannung auf den Federkörper 3 wird dadurch aufgebracht, dass die beiden einander gegenüberliegend angeordneten Anbindeteile 5, 6, die vor ihrer Montage in den Fig. 3 und 4 gezeigt sind, so lange aufeinander zubewegt werden, bis sich die einander zugewandten Seiten der als Halbschalen 9, 10 ausgebildeten Anbindeteile 5, 6 anliegend berühren. Darstellt ist diese anliegende Berührung in den Fig. 6 und 7.
Abweichend von dieser Ausgestaltung besteht die Möglichkeit, dass sich die Halbschalen 9, 10 bei der Montage nicht anliegend berühren. Sie werden dann lediglich soweit aufeinander zu bewegt, bis die vormontierte Einheit 19 in den Einbauraum 14 passt.

Die vorgespannte Einheit 19 wird anschließend in den Einbauraum 14 des Gehäuses 1 eingesetzt und in Z-Richtung so lange in den Einbauraum 14 abgesenkt, bis der Bund 21, 22 der jeweiligen Anbindeteile 5, 6 den oberen Rand 23 des Einbauraums 14 des Gehäuses 1 anliegend berührt.

Anschließend werden die beiden Bördellaschen 7, 8 der beiden Anbindeteile 5, 6 um die jeweiligen Gehäusevorsprünge 15, 16 umgebördelt, so dass die Einheit 19, bestehend aus dem Lagerkern 2, dem Federkörper 3 und den beiden Anbindeteilen 5, 6 in Z-Richtung 20 ortsfest innerhalb des Einbauraums 14 angeordnet ist.

Die Einheit 19 ist miteinander vulkanisiert. Sowohl der Lagerkern 2 als auch die beiden Anbindeteile 5, 6 bestehen jeweils aus einem metallischen Werkstoff; der Federkörper besteht demgegenüber aus einem elastomeren Werkstoff.

Der elastomere Werkstoff des Federkörpers 3 umschließt den Lagerkern 2 außenumfangsseitig vollständig, so dass auch die vier sich jeweils in X-Richtung 11 des Lagers 1 erstreckenden Anschlagpuffer 12.1, 12.2, 12.3, 12.4 des doppel-T-förmig ausgebildeten Lagerkerns 2 eine Beschichtung aus elastomerem Werkstoff aufweisen. Bei Bewegungen des Lagerkerns 2 in X-Richtung 11 begrenzen die Anschlagpuffer 12.1, 12.2, 12.3, 12.4 unerwünscht große Auslenkungen in dieser Richtung. Bevor innerhalb des Federkörpers 3 die Gebrauchsdauer verringernde Zugspannungen entstehen, schlagen die Anschlagpuffer 12.1, 12.2, 12.3, 12.4 an den jeweiligen Anschlagflächen 24.1, 24.2, 24.3, 24.4 an.

In Y-Richtung 25 ist der Lagerkern 2 im Wesentlichen doppel-T-förmig ausgebildet.

Während der bestimmungsgemäßen Verwendung des Lagers ist dieses von einem hier nicht dargestellten oberen Anschlussteil überdeckt. Das obere Anschlussteil ist zur besseren Übersichtlichkeit hier nicht dargestellt.

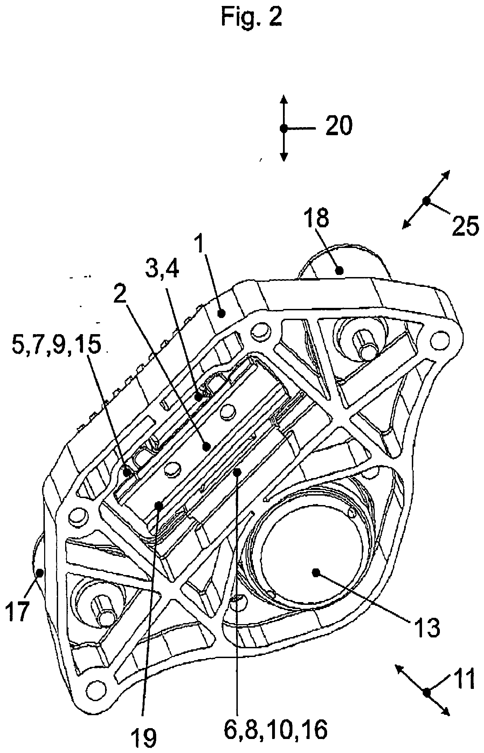

In Fig. 2 ist das Getriebelager aus Fig. 1 in einer perspektivischen Ansicht von unten gezeigt. Es ist zu erkennen, dass die Einheit 19 durch Umbördelung der beiden Bördellaschen 7, 8 formschlüssig innerhalb des Einbauraums 14 des Gehäuses 1 angeordnet ist.

In Fig. 3 ist die Einheit 19 aus den Fig. 1 und 2 in einer perspektivischen Darstellung gezeigt. Dargestellt ist die Einheit 19 vor ihrem Einbau in den Einbauraum 14. Das ist daran zu erkennen, dass die halbschalenförmig ausgebildeten Anbindeteile 5, 6 im Bereich ihrer einander zugewandten Stirnseiten mit Abstand zueinander benachbart angeordnet sind. Der Federkörper 3 ist in dieser Darstellung noch nicht vorgespannt.

Die Bördellaschen 7, 8 sind unverformt, so dass die Einheit 19 von oben in den Einbauraum 14 eingesetzt werden kann, wobei die Einheit 19 so lange in den Einbauraum 14 abgesenkt wird, bis der jeweilige Bund 21, 22 der beiden Anbindeteile 5, 6 den oberen Rand 23 des Einbauraums 14 anliegend berührt.

In Fig. 4 ist eine Draufsicht auf die noch nicht eingebaute Einheit aus Fig. 3 gezeigt. Das Maß der Druckvorspannung ergibt sich im dargestellten Ausführungsbeispiel durch den Abstand der beiden Stirnseiten der Halbschalen 9, 10 in X-Richtung 11 relativ zueinander.

Die Einheit 19 aus Fig. 4 ist in Fig. 7 im eingebauten Zustand gezeigt.

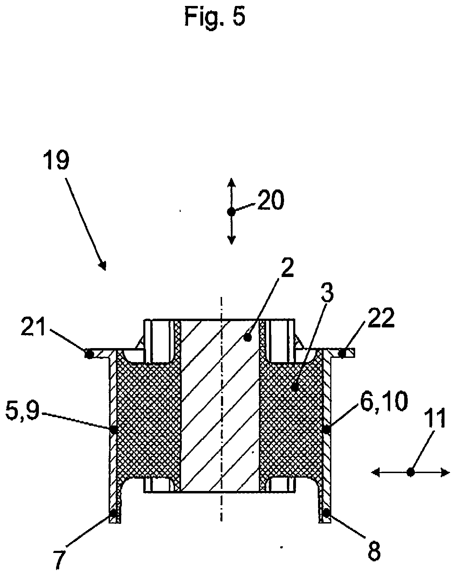

In Fig. 5 ist die Einheit 19 aus den Fig. 3 und 4, geschnitten entlang der Linie A-A aus Fig. 4 gezeigt. Der Lagerkern 2 und die Anbindeteile 5, 6 bestehen jeweils aus einem metallischen Werkstoff, der Federkörper 3 aus einem elastomeren Werkstoff.

In Fig. 6 ist die Einheit 19 aus Fig. 3 im eingebauten Zustand gezeigt. Wegen der besseren Übersichtlichkeit ist das Gehäuse 1 hier nicht dargestellt.

Die als Halbschalen 9, 10 ausgebildeten Anbindeteile 5, 6 berühren sich mit ihren einander zugewandten Stirnseiten. Dadurch wird von außen eine Druckvorspannung auf den Federkörper 3 aufgebracht, so dass bei Verlagerungen des Lagerkerns 2 relativ zu den Anbindeteilen 5, 6 in X-Richtung 11 innerhalb des Federkörpers 3 keine die Gebrauchsdauer verringernden Zugspannungen entstehen.

Die formschlüssige Festlegung der Einheit 19 im Einbauraum des Gehäuses 1 ist durch den jeweiligen Bund 21, 22 des ersten und zweiten Anbindeteils 5, 6 in Verbindung mit den beiden umgebördelten Bördellaschen 7, 8 zu erkennen. In Z-Richtung 20 zwischen dem jeweiligen Bund 21, 22 und der jeweiligen Bördellasche 7, 8 ist das Gehäuse 1 angeordnet, wobei die Bördellaschen 7, 8 um entsprechende Gehäusevorsprünge 15, 16 herum umgebördelt sind.

In Fig. 7 ist die Einheit 19 aus Fig. 6 in einer Draufsicht gezeigt. In X-Richtung 11 ist der Federkörper 3 vorgespannt, und die Anschlagpuffer 12.1, 12.2, 12.3, 12.4 sind den jeweiligen Anschlagflächen 24.1, 24.2, 24.3, 24.4 in X-Richtung mit Abstand benachbart zugeordnet. In Y-Richtung 25, die sich quer zur X-Richtung 11 erstreckt, ist der Lagerkern 2 ebenfalls benachbart zu den Anschlagflächen 26, 27 angeordnet, um die Gebrauchsdauer verringernde, zu hohe Schubspannungen innerhalb des Federkörpers 3 bei Relativverlagerungen des Lagerkerns 2 relativ zum Gehäuse 1 in Y-Richtung 25 zu verhindern.

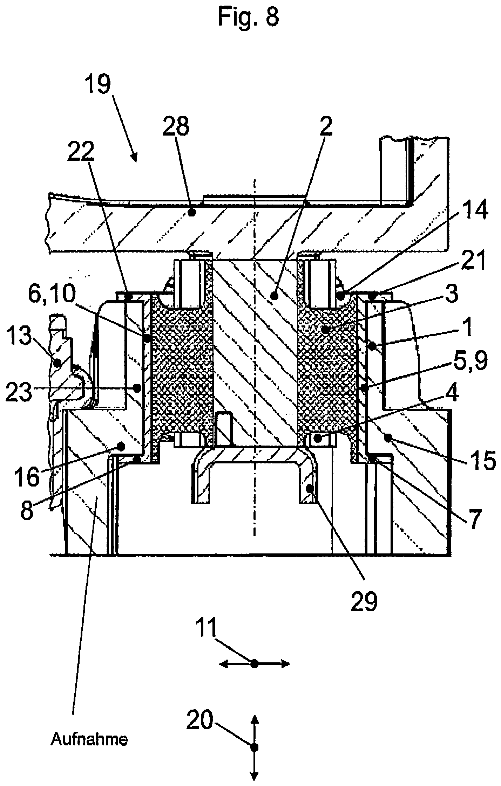

In Fig. 8 ist eine Schnittdarstellung des erfindungsgemäßen Getriebelagers gezeigt, wobei in dieser Darstellung auch das in den Fig. 1 und 2 fehlende obere Anschlussteil gezeigt ist. Der Lagerkern 2 ist auf seiner dem oberen Anschlussteil 28 abgewandten Seite mit einem Zuganschlag 29 versehen, um unerwünscht große Schubbewegungen des Federkörpers 3 in Z-Richtung 20 zu vermeiden.

In Abhängigkeit vom jeweiligen Anwendungsfall besteht die Möglichkeit, neben dem dargestellten Zuganschlag 29 weitere Anschläge, beispielsweise Druckanschläge vorzusehen, ebenfalls mit dem Ziel, unerwünscht große Verformungswege des Federkörpers 3 zu begrenzen.

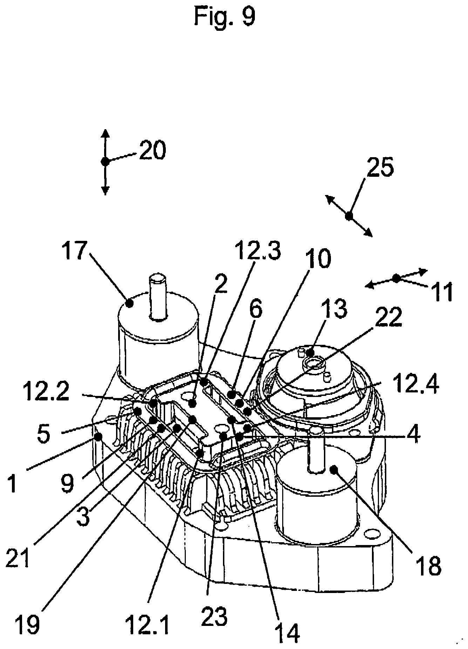

In Fig. 9 ist ein zweites Ausführungsbeispiel eines Lagers gezeigt. Der Unterschied zum ersten Ausführungsbeispiel besteht darin, dass in diesem Ausführungsbeispiel keine Anbindeteile vorgesehen sind, so dass die Einheit 19 in diesem Ausführungsbeispiel nur durch den Lagerkern 2 und Federkörper 3 gebildet wird. Der Federkörper 3 umschließt den Lagerkern 2 wie auch im ersten Ausführungsbeispiel gemäß der Fig. 1 bis 8, wobei der Federkörper 3, bezogen auf den Einbauraum 14 des Gehäuses 1 allseitig oder in Richtung der Vorspannung, hier in X-Richtung, ein relatives Übermaß aufweist. Dieses relative Übermaß ist einerseits vorgesehen, um die Einheit 19 innerhalb des Einbauraums 14 während der bestimmungsgemäßen Verwendung des Lagers sicher zu halten und andererseits um eine Druckvorspannung von außen auf den Federkörper 3 aufzubringen.
Die Funktion der Bördellaschen 7, 8 beziehungsweise der Bünde 21, 22 kann hierbei durch mitangeformte Gummiwülste ersetzt werden.

Bezüglich der übrigen Merkmale unterscheidet sich das zweite Ausführungsbeispiel gemäß Fig. 9 von den ersten Ausführungsbeispielen gemäß der Fig. 1 bis 8 nicht.

## Patentansprüche

1. Getriebelager, umfassend ein Gehäuse (1), einen Lagerkern (2) und einen Federkörper (3) aus elastomerem Werkstoff, wobei das Gehäuse (1) den Lagerkern (2) außenumfangsseitig mit Abstand umschließt, wobei in dem durch den Abstand gebildeten Spalt (4) der Federkörper (3) angeordnet ist, wobei der Federkörper (3) und der Lagerkern (2) miteinander vulkanisiert ausgebildet sind, wobei der Lagerkern (2) im Wesentlichen doppel-T-förmig ausgebildet ist und vier in X-Richtung (11) des Getriebelagers angeordnete Anschlagpuffer (12.1, 12.2, 12.3, 12.4) aufweist, **dadurch gekennzeichnet, dass** das Gehäuse (1) und der Federkörper (3) einander ungebunden zugeordnet sind, dass der Federkörper (3) mit zwei einander gegenüberliegend angeordneten Anbindeteilen (5, 6) verbunden ist und dass der Federkörper (3) mittels der Anbindeteile (5, 6) unter elastischer Vorspannung im Gehäuse (1) festgelegt ist, dass die Anbindeteile (5, 6) den Federkörper (3) aussenumfangsseitig halbschalenförmig umschließen, dass sich die einander zugewandten Seiten der Halbschalen (9, 10) während der bestimmungsgemäßen Verwendung des Getriebelagers anliegend berühren und dass der elastomere Werkstoff des Federkörpers (3) den Lagerkern (2) aussenumfangsseitig vollständig umschließt.

2. Getriebelager nach Anspruch 1, **dadurch gekennzeichnet, dass** die Anbindeteile (5, 6) und der Federkörper (3) miteinander vulkanisiert ausgebildet sind.

3. Getriebelager nach einem der Ansprüche 1 oder 2 , **dadurch gekennzeichnet, dass** die Anbindeteile (5, 6) stirnseitig zumindest einerseits jeweils zumindest eine Bördellasche (7, 8) aufweisen, und dass die Bördellasche (7, 8) mit dem Gehäuse (1) formschlüssig verbunden ist.

4. Getriebeager nach einem der Ansprüche 1 bis 3, **dadurch gekennzeichnet, dass** das Gehäuse (1) als Trägerplatte ausgebildet ist und zusätzlich zum Federkörper (3) zumindest ein weiteres Stützlager (13) trägt.

5. Verfahren zur Montage eines Getriebelagers nach einem der Ansprüche 1 bis 4, wobei der Lagerkern (2) und der Federkörper (3) in das Gehäuse (1) montiert werden, **dadurch gekennzeichnet, dass** in einem ersten Verfahrensschritt der Lagerkern (2) und die Anbindeteile (5, 6) mit dem Federkörper (2) vulkanisiert werden, dass in einem zweiten Verfahrensschritt der Federkörper (3) über die Anbindeteile (5, 6) von außen elastisch vorgespannt wird und dass der vorgespannte Federkörper (3), der Lagerkern (2) und die Anbindeteile (5, 6) in einem dritten Verfahrensschritt in einen Einbauraum (14) des Gehäuses (1) eingesetzt werden.

6. Verfahren nach Anspruch 5, **dadurch gekennzeichnet, dass** in einem vierten Verfahrensschritt die Bördellaschen (7, 8) der Anbindeteile (5, 6) hinter jeweils einem Gehäusevorsprung (15, 16) des Gehäuses (1) umgebördelt werden.

## Claims

1. Gearbox mount comprising a housing (1), a mount core (2) and a spring body (3) made of elastomeric material, the housing (1) enclosing the mount core (2) at a distance on the outer periphery, the spring body (3) being arranged in the gap (4) formed by the distance, wherein the spring body (3) and the mount core (2) are vulcanized together, wherein the mounting core (2) is substantially double T-shaped and comprises four stop buffers (12.1, 12.2, 12.3, 12.4) arranged in an X-direction (11) of the gearbox mount, **characterised in that** the housing (1) and the spring body (3) are associated with each other in an unlinked manner, **in that** the spring body (3) is linked to two connecting parts (5, 6) arranged opposite to one another, and **in that** the spring body (3) is fixed in the housing (1) by means of the connecting parts (5, 6) under elastic pre-tension, **in that** the connecting parts (5, 6) enclose the spring body (3) in the form of a half-shell on the outer circumference, **in that** the sides of the half-shells (9, 10) facing each other are in contact during the intended use of the gearbox mount, and **in that** the elastomeric material of the spring body (3) completely encloses the mount core (2) on the outer circumference.

2. Gearbox mount according to claim 1, **characterised in that** the connecting parts (5, 6) and the spring body (3) are designed such that they are vulcanised together.

3. Gearbox mount according to one of claims 1 or 2, **characterized in that** the connecting parts (5, 6) have at least one flange tab (7, 8) at the end face on at least one side, and **in that** the flange tab (7, 8) is positively connected to the housing (1).

4. Gearbox mount according to one of claims 1 to 3, **characterized in that** the housing (1) is designed as a support plate and supports at least one further support mount (13) in addition to the spring body (3).

5. Method for assembling a gearbox mount according to one of the claims 1 to 4 in which the mount core (2) and the spring body (3) are inserted into the housing (1), **characterised in that** in a first method step the mount core (2) and the connecting parts (5, 6) are vulcanized with the spring body (3), **in that** in a second method step the spring body (3) is elastically preloaded from the outside via the connecting parts (5, 6) and that the preloaded spring body (3), the mount core (2) and the connecting parts (5, 6) are inserted into an installation space (14) of the housing (1) in a third method step.

6. Method according to claim 5, **characterised in that** in a fourth method step the flange tabs (7, 8) of the connecting parts (5, 6) are folded behind one housing projection (15, 16) of the housing (1).

## Revendications

1. Palier de transmission, comportant un boîtier (1), un noyau de palier (2) et un corps formant ressort (3) en matériau élastomère, le boîtier (1) entourant à distance le noyau de palier (2) du côté de la périphérie extérieure, le corps formant ressort (3) étant agencé dans l'intervalle (4) formé par la distance, le corps formant ressort (3) et le noyau de palier (2) étant réalisés de façon vulcanisée l'un avec l'autre, le noyau de palier (2) étant réalisé sensiblement en forme de T double et comprenant quatre tampons de butée (12.1, 12.2, 12.3, 12.4) agencés en direction X (11) du palier de transmission,
**caractérisé en ce que**
le boîtier (1) et le corps formant ressort (3) sont associés l'un à l'autre sans liaison, **en ce que** le corps formant ressort (3) est relié à deux parties d'attachement (5, 6) agencées en regard l'une de l'autre, et **en ce que** le corps formant ressort (3) est immobilisé dans le boîtier (1) sous précontrainte élastique au moyen des parties d'attachement (5, 6), **en ce que** les parties d'attachement (5, 6) entourent en forme de demi-coque le corps formant ressort (3) du côté de la périphérie extérieure, **en ce que** les côtés des demi-coques (9, 10) tournés l'un vers l'autre se touchent en appui pendant l'utilisation du palier de transmission conforme à sa destination, et **en ce que** le matériau élastomère du corps formant ressort (3) entoure complètement le noyau de palier (2) du côté de la périphérie extérieure.

2. Palier de transmission selon la revendication 1, **caractérisé en ce que** les parties d'attachement (5, 6) et le corps formant ressort (3) sont réalisés en étant vulcanisés l'un avec l'autre.

3. Palier de transmission selon l'une des revendications 1 ou 2, **caractérisé en ce que** les parties d'attachement (5, 6) présentent du côté frontal au moins une patte rabattue respective (7, 8) au moins sur un côté, et **en ce que** la patte rabattue (7, 8) est reliée par coopération de formes au boîtier (1).

4. Palier de transmission selon l'une des revendications 1 à 3, **caractérisé en ce que** le boîtier (1) est réalisé sous forme de plaque de support et porte au moins un autre palier d'appui (13) en supplément au corps formant ressort (3).

5. Procédé de montage d'un palier de transmission selon l'une des revendications 1 à 4, dans lequel le noyau de palier (2) et le corps formant ressort (3) sont montés dans le boîtier (1), **caractérisé en ce que** dans une première étape du procédé, le noyau de palier (2) et les parties d'attachement (5, 6) sont vulcanisés avec le corps formant ressort (3), **en ce que** dans une seconde étape du procédé le corps formant ressort (3) est précontraint élastiquement depuis l'extérieur par les parties d'attachement (5, 6), et **en ce que** dans une troisième étape du procédé, le corps formant ressort (3) précontraint, le noyau de palier (2) et les parties d'attachement (5, 6) sont mis en place dans un espace de montage (14) du boîtier (1).

6. Procédé selon la revendication 5, **caractérisé en ce que** dans une quatrième étape du procédé, les pattes rabattues (7, 8) des parties d'attachement (5, 6) sont rabattues derrière une saillie respective (15, 16) du boîtier (1).
